# EUROPÄISCHE PATENTSCHRIFT

(11) **EP 2 284 432 B1**
(45) Veröffentlichungstag und Bekanntmachung des Hinweises auf die Patenterteilung: **02.07.2014**
(21) Anmeldenummer: 10008398.9
(22) Anmeldetag: 12.08.2010
(51) Int. Cl.: F16P 3/08, E05B 15/02, E05B 17/22

(54) **Vorrichtung zum Überwachen eines Zustandes einer sicherheitsrelevanten Einrichtung**
Device for monitoring the status of a secure facility
Dispositif de surveillance d'un état d'un dispositif relevant de la sécurité

(30) Priorität: 14.08.2009 DE 102009037349
(43) Veröffentlichungstag der Anmeldung: 16.02.2011
(73) Patentinhaber: K.A. Schmersal Holding GmbH & Co. KG, 42279 Wuppertal (DE)
(72) Erfinder: Herbote, Michael, 45549 Sprockhövel (DE); Wilting, Andreas, 58300 Wetter-Wengern (DE)
(74) Vertreter: Henseler, Daniela

(56) Entgegenhaltungen:
- EP-A2- 1 160 811
- EP-A2- 1 387 379
- DE-A1- 19 516 398

## Beschreibung

Die Erfindung betrifft eine Vorrichtung zum Überwachen eines Zustandes einer sicherheitsrelevanten Einrichtung nach dem Oberbegriff des Anspruchs 1.

Aus DE 195 16 398 A1 sind statische Sensoren bekannt, die mit mechanischen Sicherungen gegen Aufhebelkraft integriert sind und werden vorzugsweise auf den Rahmen mit Befestigungsschrauben aufgeschraubt, auf dem sich eine innerhalb der Anflanschfläche unterbrochene Leiterbahn befindet. Die im Sensor befindliche Brücke überbrückt die unterbrochene Leiterbahn. Durch Kraftwirkung verschieben sich zwei innerhalb des Sensors befindliche Fixpunkte der Brücke, wodurch die Brücke an der Sollbruchstelle getrennt wird, infolge Scher- oder Zugspannungen bzw. durch Aufhebeln von Kontaktflächen.

Bei Maschinen oder Anlagen beispielsweise in der Fertigungstechnik ist es aus Sicherheitsgründen für (Bedien-)Personen erforderlich, die Maschinen oder Anlagen innerhalb eines von der Umgebung abgetrennten Raumes bzw. Raumbereichs anzuordnen, in dem sich während des Betriebs der Maschine bzw. Anlage keine Person aufhalten darf bzw. keine Person hineingreifen kann. Der Zugang bzw. Zugriff beispielsweise für Reinigungs- oder Wartungsarbeiten wird durch eine verschließbare Öffnung gewährleistet, bei der ein bewegliches Teil, beispielsweise eine Tür, Klappe, Deckel oder dergleichen, gegenüber einem feststehenden Teil, beispielsweise einer feststehenden Wand, beweglich ist. Das oder die beweglichen Teile können durch Schwenken bzw. Schieben geöffnet bzw. geschlossen werden. Über eine sicherheitsrelevante Einrichtung, wie beispielsweise einen Sicherheitsschalter oder eine Zuhaltung, ist es möglich, den Zustand der beweglichen Tür, d.h. ob sie geöffnet oder geschlossen ist, zu erkennen bzw. über die Zuhaltung eine Blockierung bzw. Verriegelung des geschlossenen Zustand der Öffnung zu erreichen.

Aus DE 10 2008 039 904 A1 ist eine Zuhaltung für ein Bauteil zum Verschließen einer Öffnung bekannt, bei dem ein mechanischer Betätiger durch eine Öffnung eines Gehäuses hindurch greifen kann und der Betätiger arretiert, und dadurch die zu überwachende Einrichtung im geschlossenen Zustand arretiert werden kann. Es ist ein weiteres Sensorelement vorgesehen, das mit einem Lesekopf elektrisch kontaktlos zusammenwirkt, und dadurch der zugehaltene Zustand der zu überwachenden Einrichtung "in einem zweiten Kanal" feststellbar ist.

Es ist damit eine Sicherheitszuhaltung bekannt, bei der ein mechanischer Betätiger in ein "Schloss" einer Zuhaltung eingeführt werden kann. Durch eine mechanische Verriegelung wird der Betätiger in der eingeführten Position arretiert, so dass die Tür geschlossen bleibt.

Es ist sicherheitskritisch, wenn der Betätiger bricht, da in diesem Fall der Schaltmechanismus aufgrund des eingeführten Betätigers immer noch betätigt ist und beispielsweise eine als Sicherheitsschalter ausgeführte Vorrichtung die Maschine freigeben würde, obwohl der Betätiger aufgrund des Bruches nicht mehr fest mit der Tür verbunden ist und die Tür geöffnet werden könnte, ohne dass die Maschine abschaltet. Die zweikanalige Ausführung zum Feststellen des Zustands der Tür hilft hierbei, jedoch werden nicht alle Möglichkeiten erkannt.

Aufgabe der Erfindung ist es daher, eine Vorrichtung zum Überwachen eines Zustands einer sicherheitsrelevanten Einrichtung mit einem mechanischen Betätiger und einem berührungslosen Sensorelement zu schaffen, die eine Verbesserung zur Feststellung eines möglichen Betätigerbruchs gewährleistet, so dass ein möglicher Betätigerbruch bei Überschreiten einer Maximalkraft auf den Betätiger mit einfachen Mitteln sicher und zuverlässig festgestellt werden kann.

Diese Aufgabe wird durch die Merkmale des Anspruchs 1 gelöst.

Hierdurch wird eine Vorrichtung zum Überwachen eines Zustands einer sicherheitsrelevanten Einrichtung mit einem mechanischen Betätiger und einem berührungslosen Sensorelement geschaffen, bei der der Betätiger und das berührungslose Sensorelement an einem Bauteil ausgestaltet sind, das an einem beweglichen Teil einer Tür, Klappe, eines Deckels oder dergleichen befestigbar ist. Dadurch, dass der Betätiger und das Sensorelement an einem Bauteil angebracht sind, ist eine hohe Montagesicherheit gewährleistet, die die Sicherheitsfunktion der Vorrichtung erhöht. Nur bei einer geeigneten Montage ist eines möglich, den Zustand der sicherheitsrelevanten Einrichtung zu ermitteln. Das Bauteil weist eine Sollbruchstelle auf, die zwischen dem Sensorelement und dem Betätiger angeordnet ist. Die Sollbruchstelle des Bauteils ist so ausgestaltet, dass die Sollbruchstelle bei Überschreiten einer in Richtung der Betätigung ausgeübten Maximalkraft auf den Betätiger ohne Zerstörung des Betätigers bricht. Das bedeutet, dass die Sollbruchstelle des Bauteils nur eine geringere Belastung aushalten kann als der Betätiger selbst. Es kommt daher bei Überschreiten einer Maximalkraft nicht zu einem Bruch des Betätigers selbst, sondern zu einem Bruch der Sollbruchstelle. Der Betätiger kann dann zwar an seiner Position verbleiben, aber aufgrund der ausgeübten Kraft wird das berührungslose Sensorelement aus seiner Lage gebracht, und es kann über einen entsprechenden Sensor, der das Vorhandensein des Sensorelements überwacht, festgestellt werden, dass das Sensorelement und damit der bewegliche Teil bewegt wird/wurde.

Um die Funktion der Sollbruchstelle erfindungsgemäß weiter zu verbessern, ist es bevorzugt, dass das Bauteil jeweils dem Betätiger und dem Sensorelement zugeordnete Befestigungsmittel aufweist. Hierdurch wird die Wahrscheinlichkeit erhöht, dass das Bauteil entlang der Sollbruchstelle bricht und ein Fehler minimiert, dass es eventuell nicht zu einem Bruch der Sollbruchstelle, sondern zu einem Bruch des Betätigers kommt. Durch die bevorzugt vorgesehenen jedem der beiden Elemente, d.h. Betätiger und Sensorelement, zugeordneten Befestigungsmittel wird das Erkennen eines möglichen Betätigerbruches weiter gesteigert.

Vorzugsweise ist das berührungslose Sensorelement ein Magnet eines ReedKontakts, wodurch eine zuverlässige und konstruktiv einfache Ausgestaltung möglich ist.

Bevorzugt kann das Sensorelement auch als ein Transponder ausgestaltet sein, dem eine vorbestimmte, von einem Sensor auslesbare ID zugeordnet ist, was die Manipulationssicherheit der Vorrichtung erhöht.

Bevorzugt kann das Sensorelement auch nach dem Puls-Echo-Verfahren zur Kommunikation mit einem Lesegerät bzw. Sensor ausgestaltet sein.

Um zu verhindern, dass bei einem erneuten Schließen des beweglichen Teils nach einem Bruch der Sollbruchstelle die sicherheitsrelevante Einrichtung wieder anfahren kann bzw. angefahren wird, ohne dass der Bruch der Vorrichtung behoben wurde, ist ein Speicher vorgesehen, in dem eine Information speicherbar ist, dass ein Freigabesignal aufgrund des Vorhandenseins des Betätigers und kein Freigabesignal aufgrund des Fehlens des Sensorelements vorliegt, wobei bei Vorliegen der Information die sicherheitsrelevante Einrichtung in einen sicheren Zustand gebracht wird und ohne Änderung der Information in dem sicheren Zustand verbleibt. Es ist demnach vorgesehen, dass elektronisch eine Löschung des Speichers vorgenommen werden muss, wenn ein Bruch der Sollbruchstelle festgestellt wird. Eine Steuereinheit, die mit einem Sensor zur Feststellung der Anwesenheit des Betätigers und mit einem Sensor zur Anwesenheit des Sensorelements verbunden ist, ist zum Schreiben des Speichers ausgestaltet. Die Steuereinheit ist vorzugsweise im feststehenden Teil der Öffnung, d.h. beispielsweise in der Wand der Öffnung ausgebildet ebenso wie die Sensoren.

Die Erfindung wird nachstehend anhand des in der beigefügten Abbildung dargestellten Ausführungsbeispiels näher erläutert.

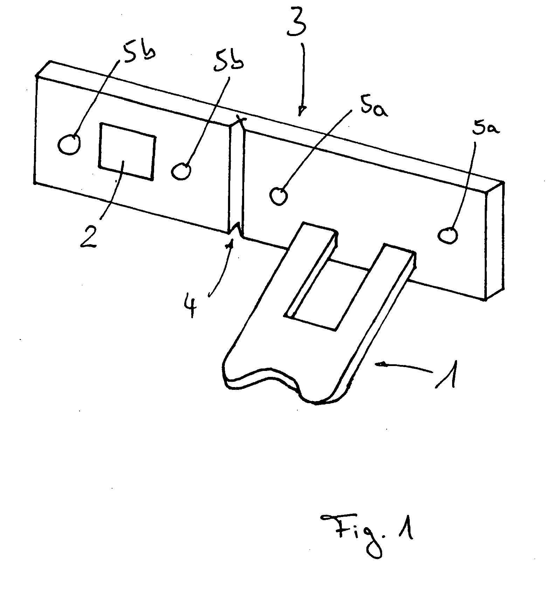

Figur 1 zeigt schematisch ein Ausführungsbeispiel einer erfindungsgemäßen Vorrichtung zum Überwachen eines Zustands einer sicherheitsrelevanten Einrichtung.

Figur 1 zeigt eine Ausführungsform einer erfindungsgemäßen Vorrichtung zum Überwachen eines Zustandes einer sicherheitsrelevanten Einrichtung. Die Vorrichtung weist einen mechanischen Betätiger 1 und ein berührungsloses Sensorelement 2 auf. Es ist ein Bauteil 3 vorgesehen, das an einem nicht dargestellten beweglichen Teil einer Öffnung für eine sicherheitsrelevante Einrichtung befestigbar ist. Das bewegliche Teil kann eine Tür, Klappe, Deckel oder dergleichen einer sicherheitsrelevanten Einrichtung sein. Der Betätiger 1 und das Sensorelement 2 sind an dem Bauteil 3 angeordnet. Das Bauteil 3 ist bezogen auf die Anordnungspunkte des Betätigers 1 und des Sensorelements 2 einstückig ausgebildet.

Das Bauteil 3 weist eine Sollbruchstelle 4 auf, die zwischen dem Betätiger 1 und dem Sensorelement 2 angeordnet ist. Die Sollbruchstelle 4 ist so ausgestaltet, dass sie bei Überschreiten einer in Richtung der Betätigung ausgeübten Maximalkraft auf den Betätiger 1 ohne Zerstörung des Betätigers 1 bricht und das Sensorelement 2 am beweglichen Teil verbleibt. Mit der Richtung der Betätigung ist hier sowohl die Richtung des "Einführens" des mechanischen Betätigers in das "Schloss" gemeint als auch die Richtung des "Außereingriffbringens" des mechanischen Betätigers aus dem Schloss. Es wird somit sichergestellt, dass, sollte eine Kraft auf den Betätiger 1 wirken, die zu einem Bruch des Betätigers 1 führen könnte, deren Hauptkomponente eben in Richtung der Betätigung liegt, vorher die Sollbruchstelle 4 bricht. Das Sensorelement 2 verbleibt auf jeden Fall zuverlässig an dem beweglichen Teil der sicherheitsrelevanten Einrichtung.

Im dargestellten Ausführungsbeispiel weist das Bauteil jeweils dem Betätiger 1 und dem Sensorelement 2 zugeordnete Befestigungsmittel 5 auf. Die Befestigungsmittel 5, die in Form von Schrauben und Löchern - oder ähnlichen Befestigungsmitteln - eine Befestigung an dem beweglichen Teil ermöglichen, sind so ausgestaltet, dass die in Figur 1 dargestellten Löcher 5a dem mechanischen Betätiger 1 zugeordnet sind. Die in Figur 1 dargestellten Löcher 5b sind dem Sensorelement 2 zugeordnet und dienen zur sicheren Befestigung des Sensorelements 2 an dem beweglichen Teil.

## Patentansprüche

1. Vorrichtung zum Überwachen eines Zustandes einer sicherheitsrelevanten Einrichtung mit einem mechanischen Betätiger (1) und einem berührungslosen Sensorelement (2), wobei der Betätiger (1) und das berührungslose Sensorelement (2) an einem Bauteil (3) zur Befestigung an einem beweglichen Teil ausgestaltet sind und das Bauteil (3) eine Sollbruchstelle (4) aufweist, der Betätiger (1) und das Sensorelement (2) nebeneinander angeordnet sind, und die Sollbruchstelle (4) beabstandet von dem Betätiger (1) und dem Sensorelement (2) zwischen dem in ein am feststehenden Teil befindliches Schloss einführbaren Betätiger (1) und dem Sensorelement (2) angeordnet ist, **dadurch gekennzeichnet, dass** die Sollbruchstelle (4) so ausgestaltet ist, dass sie bei Überschreiten einer in Richtung der Betätigung des Betätigers (1) ausgeubten Maximalkraft auf den Betätiger (1) ohne Zerstörung des Betätigers (1) bricht und das Sensorelement (2) am beweglichen Teil der sicherheitsrelevanten Einrichtung verbleibt und aus seiner Lage gebracht wird, wobei über einen entsprechenden Sensor, der das Vorhandensein des Sensorelements (2) überwacht feststellbar ist, dass das Sensorelement und damit der bewegliche Teil bewegt wird oder wurde.

2. Vorrichtung nach Anspruch 1, **dadurch gekennzeichnet, dass** das Bauteil (3) jeweils dem Betätiger (1) und dem Sensorelement (2) zugeordnete Befestigungmittel (5) aufweist.

3. Vorrichtung nach Anspruch 1 oder 2, **dadurch gekennzeichnet, dass** das Sensorelement (2) ein Magnet eines Reedkontakts ist.

4. Vorrichtung nach Anspruch 1 oder 2, **dadurch gekennzeichnet, dass** das Sensorelement (2) ein Transponder ist.

5. Vorrichtung nach Anspruch 1 oder 2, **dadurch gekennzeichnet, dass** das Sensorelement (2) zur Kommunikation nach dem Puls-Echo-Verfahren ausgestaltet ist.

6. Vorrichtung nach einem der Ansprüche 1 bis 5, **dadurch gekennzeichnet, dass** in einem Speicher (6) eine Information speicherbar ist, dass ein Freigabesignal aufgrund des Vorhandenseins des Betätigers (1) und kein Freigabesignal aufgrund des Fehlens des Sensorelements (2) vorliegt, wobei bei Vorliegen der Information die sicherheitsrelevante Einrichtung in einen sicheren Zustand gebracht wird und ohne Änderung der Information in dem sicheren Zustand verbleibt.

## Claims

1. Device for monitoring the state of a security-related apparatus having a mechanical activator (1) and a contactless sensor element (2), wherein the activator (1) and the contactless sensor element (2) are configured on a component (3) for attachment to a movable part, and the component (3) has a predetermined breakpoint (4), the activator (1) and the sensor element (2) are arranged one next to the other, and the predetermined breakpoint (4) is arranged, spaced apart from the activator (1) and the sensor element (2), between the activator (1) which can be introduced into a lock, which is located on the fixed part, and the sensor element (2), **characterized in that** the predetermined breakpoint (4) is configured in such a way that when a maximum force applied to the activator (1) in the direction of the activation of the activator (1) is exceeded, said predetermined breakpoint (4) breaks without destroying the activator (1), and the sensor element (2) remains on the movable part of the security-related apparatus and is moved out of its position, wherein by means of a corresponding sensor which monitors the presence of the sensor element (2) it can be determined whether the sensor element and therefore the movable part is or has been moved.

2. Device according to Claim 1, **characterized in that** the component (3) has attachment means (5) which are respectively assigned to the activator (1) and the sensor element (2).

3. Device according to Claim 1 or 2, **characterized in that** the sensor element (2) is a magnet of a reed contact.

4. Device according to Claim 1 or 2, **characterized in that** the sensor element (2) is a transponder.

5. Device according to Claim 1 or 2, **characterized in that** the sensor element (2) is configured for communication according to the pulse echo method.

6. Device according to one of Claims 1 to 5, **characterized in that** it is possible to store in a memory (6) information to the effect that an enable signal is present owing to the presence of the activator (1) and no enable signal is present owing to the absence of the sensor element (2), wherein, when the information is present the security-related apparatus is placed in a secure state and remains in the secure state unless the information changes.

## Revendications

1. Dispositif de surveillance d'un état d'une installation de sécurité comportant un actionneur mécanique (1) et un élément capteur sans contact (2), où ledit actionneur (1) et ledit élément capteur sans contact (2) sont agencés au niveau d'un élément de structure (3) pour être fixés à une partie mobile, et où ledit élément de structure (3) comporte une amorce de rupture (4), où ledit actionneur (1) et ledit élément capteur (2) sont disposés côte à côte, et où ladite amorce de rupture (4) est à distance dudit actionneur (1) et dudit élément capteur (2), et entre ledit actionneur (1), lequel est introduisible dans une serrure se trouvant au niveau de la partie fixe, et ledit élément capteur (2), **caractérisé en ce que**, lors d'un dépassement d'un effort maximal appliqué sur ledit actionneur (1), dans la direction d'actionnement dudit actionneur (1), ladite amorce de rupture (4) est agencée de façon à se briser sans destruction dudit actionneur (1), et **en ce que** ledit élément capteur (2) reste sur ladite partie mobile de ladite installation de sécurité et est entraîné hors de sa position, et où on peut établir, au moyen d'un capteur adéquat surveillant la présence dudit élément capteur (2), que ledit élément capteur (2) et donc ladite partie mobile est ou a été déplacée.

2. Dispositif selon la revendication 1, **caractérisé en ce que** ledit élément de structure (3) comporte des moyens de fixation (5) adaptés à la fois audit actionneur (1) et audit élément capteur (2).

3. Dispositif selon la revendication 1 ou 2, **caractérisé en ce que** ledit élément capteur (2) est un aimant d'un contacteur Reed.

4. Dispositif selon la revendication 1 ou 2, **caractérisé en ce que** ledit élément capteur (2) est un transpondeur.

5. Dispositif selon la revendication 1 ou 2, **caractérisé en ce que** ledit élément capteur (2) est agencé pour communiquer selon le procédé d'écho d'impulsions.

6. Dispositif selon l'une des revendication 1 à 5, **caractérisé en ce qu'**on mémorise dans une mémoire (6) une information selon laquelle un signal de validation est disponible en cas de présence dudit actionneur (1) et aucun signal de validation n'est disponible en cas d'absence dudit élément capteur (2), et où ladite installation de sécurité est amenée dans un état sécurisé en cas de présence de ladite information, et reste dans ledit état sécurisé en l'absence de modification de ladite information.
